# EUROPÄISCHE PATENTSCHRIFT

(11) **EP 1 660 740 B1**
(45) Veröffentlichungstag und Bekanntmachung des Hinweises auf die Patenterteilung: **09.01.2008**
(21) Anmeldenummer: 04738026.6
(22) Anmeldetag: 24.06.2004
(51) Int. Cl.: E04H 15/20, B64B 1/50

(54) **SCHWEBENDE TRAGSTRUKTUR MIT STATISCHEM AUFTRIEB**
SUSPENDED LOAD-BEARING STRUCTURE HAVING BUOYANCY
STRUCTURE PORTEUSE EN SUSPENSION A SUSTENTATION AEROSTATIQUE

(30) Priorität: 27.08.2003 CH 146203
(43) Veröffentlichungstag der Anmeldung: 31.05.2006
(73) Patentinhaber: Prospective Concepts AG, 8152 Glattbrugg (CH)
(72) Erfinder: LUCHSINGER, Rolf, H., CH-8607 Seegräben (CH)
(74) Vertreter: Salgo, Reinhold Caspar
(86) Internationale Anmeldenummer: PCT/CH2004/000385
(87) Internationale Veröffentlichungsnummer: WO 2005/021898

(56) Entgegenhaltungen:
- WO-A-01/73245
- CA-A- 2 212 770
- GB-A- 693 423

## Beschreibung

Die vorliegende Erfindung betrifft schwebende Tragstrukturen nach dem Oberbegriff des Patentanspruches 1.

Leichter-als-Luft-Strukturen mit statischem Auftrieb werden beispielsweise in WO 97/33790 (D1) als stationäre Kommunikationsplattformen im Bereich der Stratosphäre vorgeschlagen. Nebst den allgemein bekannten klassischen Luftschiffen, welche beispielsweise als Starrluftschiffe mit einem formgebenden Endoskelett ausgestattet sind und hauptsächlich Transport- und Werbezwecken dienen, offenbart WO 95/30573 (D2) ein Luftschiff in Form eine Luftschlosses, welches als Ganzes fliegen soll und Arbeits- und Wohnräume enthält. Pneumatische Bauelemente oder Träger mit einem aufblasbaren Hohlkörper sowie getrennten Druck- und Zugelementen, sind mehrere bekannt geworden, so beispielsweise aus WO 01/73245 (D3) oder aus drei CH-Patentanmeldungen, nämlich CH2003 0492/03 (D4), CH2003 0493/03 (D5), CH2003 1259/03 (D6) veröffentlicht als WO 2004083568, WO2004083569 und WO 2005007991.

Die fliegende Plattform in D1 wird durch zwei gasgefüllte Blasen mit mehr oder weniger aerodynamischer Form, eigentliche Ballone oder unstarre oder halbstarre Luftschiffe, getragen. Die Plattform selbst hat keinen Auftrieb und dient einzig der Aufnahme von technischen Geräten. D2 zeigt im Wesentlichen ein Starrluftschiff mit einer aussergewöhnlichen Form und grossen Nutzräumen im Inneren der Struktur. Die Nutz- oder Fahrgasträume sind in den Luftschiffskörper integriert, statt unterhalb an ihn angehängt. D3 offenbart ein pneumatisches Bauelement, welches einen mit Druckluft beaufschlagten Hohlkörper zur Stabilisierung eines Druckstabes enthält. Der Hohlkörper ist jedoch nicht zur Aufnahme eines Gases, welches leichter als Luft ist, vorgesehen und verfügt daher über keinen statischen Auftrieb. D4 bis D6 sind Weiterentwicklungen und Spezialfälle von D3. D3 stellt somit den nächsten Stand der Technik dar.

Die Aufgabe der vorliegenden Erfindung besteht in der Schaffung von festen stabilen Tragstrukturen mit getrennten Zug- und Druckelementen, welche im Sinne extremer Leichtbauweise ganz oder beinahe schweben können. Diese schwebenden Bauteile ermöglichen neue Lösungen für temporäre Bedachungen oder vereinfachte Montagearbeiten ohne Zuhilfenahme eines Krans. Die Tragstrukturelemente sollen anstelle kugel- oder ellipsoidförmiger, längliche oder flächige und dennoch knickstabile Bauformen ermöglichen, welche zudem kleine Windangriffsflächen bieten.

Die Lösung der Aufgabe ist wiedergegeben im kennzeichnenden Teil des Anspruches 1 hinsichtlich ihrer wesentlichen Merkmale, in den folgenden Ansprüchen hinsichtlich weiterer vorteilhafter Ausbildungen.

Anhand der beigefügten Zeichnungen wird der Erfindungsgegenstand mittels mehrerer Ausführungsbeispiele näher erläutert. Es zeigen
- Fig. 1: eine Isometrie eines Ausführungsbeispiels einer schwebenden Tragstruktur gemäss dem Stande der Technik,
- Fig. 2a,b: schematische Darstellungen eines ersten Ausführungsbeispiels einer schwebenden Tragstruktur als Isometrie und im Querschnitt,
- Fig. 3a,b: schematische Darstellungen eines zweiten Ausführungsbeispiels einer schwebenden Tragstruktur in einer Draufsicht und im Querschnitt,
- Fig. 4a,b: schematische Darstellungen eines Ausführungsbeispiels eines schwebenden Tragstrukturelementes im Querschnitt in schwebendem und nichtschwebendem Zustand,
- Fig. 5: eine schematische Darstellung eines vierten Ausführungsbeispiels einer schwebenden Tragstruktur im Querschnitt,
- Fig. 6: schematische Darstellungen eines fünften Ausführungsbeispiels einer schwebenden Tragstruktur als Isometrie und in Seitenansicht,
- Fig. 7: schematische Darstellungen eines sechsten Ausführungsbeispiels einer schwebenden Tragstruktur in Seitenansicht.

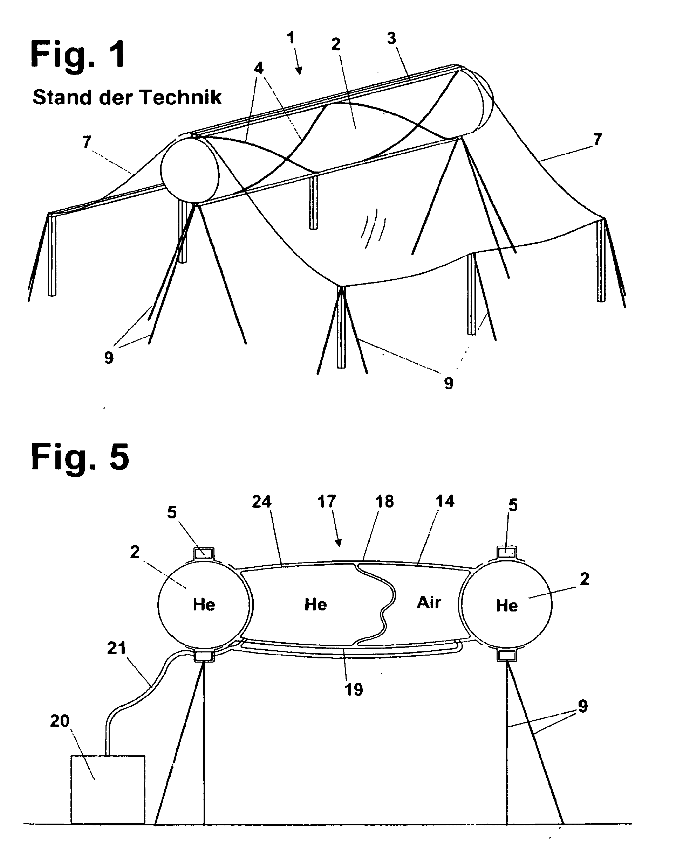

Fig. 1 zeigt eine schematische Darstellung eines Tragstrukturelementes 1 gemäss dem Stande der Technik, wie er dem Aufbau nach durch WO01/73245 bekannt ist. Ein Hohlkörper 2 eines Tragstrukturelementes 1 ist gefüllt mit einem Gas oder Gasgemisch, fortan Leichtgas genannt, welches leichter als Luft ist. Als Füllmedium bietet sich beispielsweise nichtbrennbares Ballongas an, welches zu rund 95% aus dem Edelgas Helium besteht. Geometrisch ähnlich dimensionierte, mit Leichtgas gefüllte Tragstrukturelemente 1, mit gleichen Proportionen und für die gleiche Flächenlast ausgelegt, beginnen ab einer gewissen Grösse zu schweben. Der Auftrieb des Tragstrukturelementes 1 wird aufgrund der zu Länge und Oberfläche überproportionalen Zunahme des Volumens ab dieser Grösse positiv, und der Auftrieb des Leichtgases kompensiert das Eigengewicht des Tragstrukturelementes 1. Diese Grösse hängt vom Eigengewicht des Tragstrukturelements 1, also den verwendeten Materialien und Materialmengen, sowie vom zur Verfügung stehenden befüllbaren Volumen und dem verwendeten Leichtgas ab. Je grösser das Tragstrukturelement 1 wird, desto kleiner wird das Verhältnis von seinem Eigengewicht zum Auftrieb des Leichtgasvolumens und desto grösser wird der Auftrieb des Tragstrukturelementes 1.

*Das bekannte Tragstrukturelement 1 ist in Fig. 1 noch* ergänzt *durch eine Hülle* 7. Die von der Hülle 7 verdeckten Teile der Zelthalle sind in Fig. 1 zur besseren Veranschaulichung nicht gestrichelt dargestellt.

Zusätzlich kann der Firstbalken mittels leichter Stützen an seinen Enden unterstützt sein und damit auf fixer Distanz am Boden gehalten werden. Diese Stützen können das Tragstrukturelement 1 nicht nur auf den Boden ziehen, sondern auch kleinere Auftriebsschwankungen ausgleichen.

Ein solches Zelt hat den Vorteil, dass der gesamte Innenraum säulenfrei ist und dass es sehr einfach und schnell aufgerichtet werden kann. Nachdem das Zelt am Boden montiert worden ist, kann der Hohlkörper 2 des Tragstrukturelementes 1 mit einem Leichtgas gefüllt werden, worauf sich das Zelt selbständig aufrichtet. Mit Seilverankerungen 9 direkt am Tragstrukturelement 1 und auf allen Seiten der wasserdichten Hülle 7 wird die Konstruktion am Boden gehalten und gegen einwirkende Windkräfte gesichert. Das schwebende Dach kann nachträglich mit geringem Aufwand an einen anderen Ort verschoben werden.

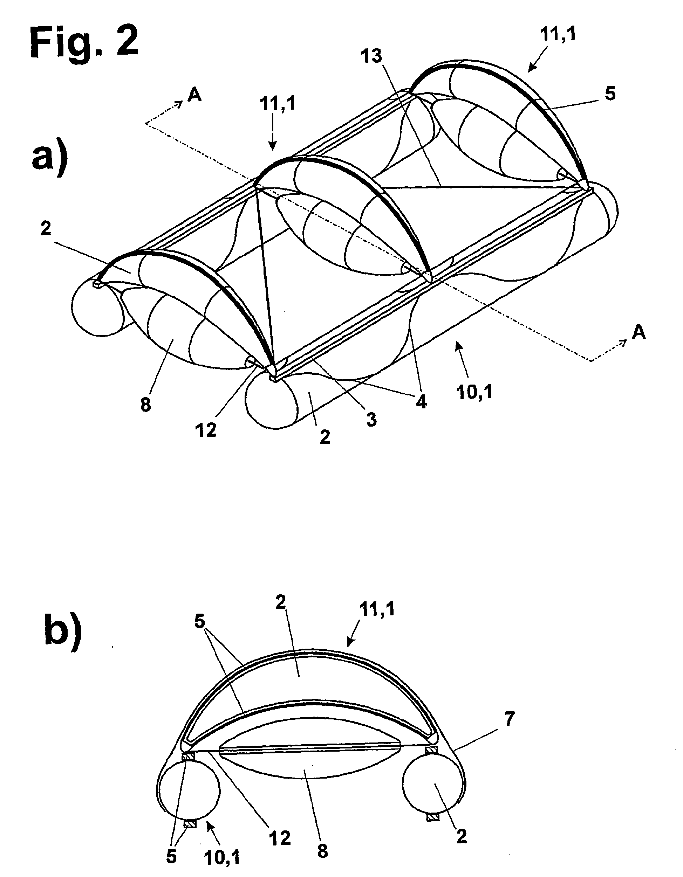

Fig. 2 zeigt ein zweites Ausführungsbeispiel einer schwebenden Bedachung aufgebaut aus schwebenden Tragstrukturelementen 1. Über zwei Längsträger 10, welche durch mehrere bogenförmige Querträger 11 miteinander verbunden sind, ist eine wasserdichte Hülle 7 gespannt, wodurch ein Tonnendach gebildet wird. Auf eine Darstellung der Hülle 7 wurde in der Isometrie Fig. 2a zwecks besserer Veranschaulichung verzichtet. Die Enden der Querträger 11 sind beispielsweise durch äussere Zugelemente 12 miteinander verbunden. Als Querträger 11 sind in diesem Ausführungsbeispiel Tragstrukturelemente 1 mit zwei longitudinal sowohl Druck- als auch Zugkräfte aufnehmenden Elementen, im Folgenden Druck/Zugelemente 5 genannt, gewählt worden. Beispielsweise kann ein Stahlstab als Druck/Zugelement 5 eingesetzt werden. Die Konstruktion wird ausserdem durch übers Kreuz von Querträger 11 zu Querträger 11 verlaufende Windverbände 13 verstärkt und stabilisiert. Weitere der Stabilisierung der Tragstruktur dienende Seilverspannungen sind dem Fachmann bekannt. Je nach Anzahl und Dimensionierung der Tragstrukturelemente 1 kann es sein, dass der Auftrieb derselben nicht ausreicht, um das ganze Dach mitsamt der wasserdichten Hülle 7 zum Schweben zu bringen und es mit ausreichender Auftriebsreserve in der Luft zu halten. In diesem Fall kann für die Bereitstellung von zusätzlichem Auftrieb ein Auftriebskörper 8 unter dem Tonnengewölbe angebracht und mit einem Leichtgas gefüllt werden. Dieser Auftriebskörper 8 kann aus einer leichten gasdichten Membran gefertigt sein und beispielsweise an den Querträgern 11 mittels aufgeklebter Befestigungslaschen fixiert werden. Der Auftriebskörper 8 kann beispielsweise für eine vereinfachte Befestigung an den Tragstrukturelementen 1 auch mit einem Netz umhüllt werden. Eine andere, dem Fachmann geläufige Konstruktionsart des Auftriebskörpers 8 weist einen zweilagigen Aufbau auf, mit einer äusseren dehnungsarmen Hülle und einer darin eingelegten gasdichten elastischen Blase zur Aufnahme des Leichtgases. Im dargestellten Ausführungsbeispiel sind die Auftriebskörper 8 unter den Querträgern 11 angebracht und umschliessen ringförmig das äussere Zugelement 12. Fig. 2b zeigt das Ausführungsbeispiel im Schnitt AA, wobei hier die Hülle 7 dargestellt ist. Die Hülle 7 ist an den Längsträgern 10 mittels lösbarer Verbindung befestigt.

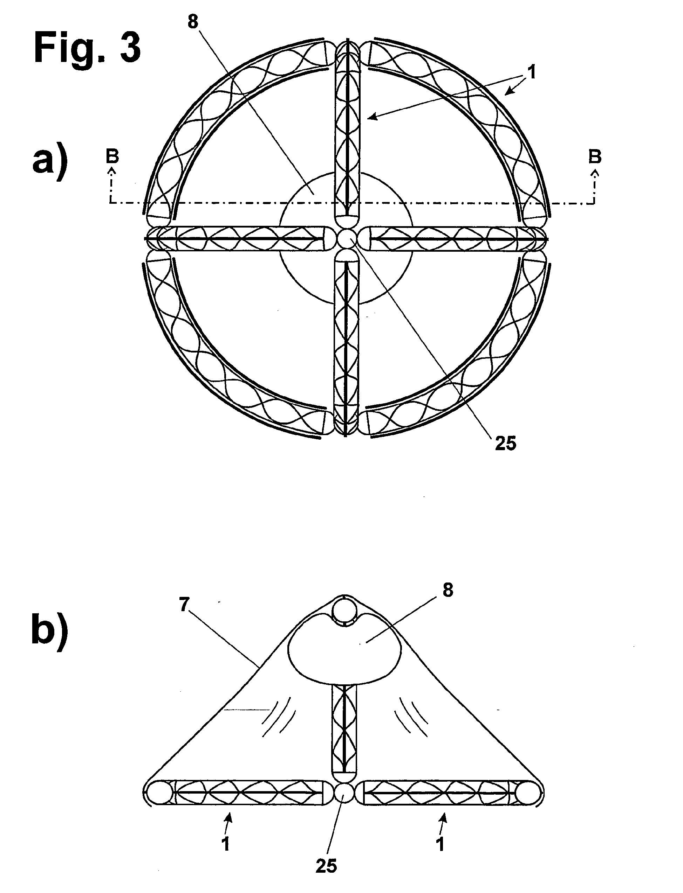

In Fig. 3 ist ein drittes Ausführungsbeispiel einer schwebenden Bedachung dargestellt. Mehrere Tragstrukturelemente 1 sind mittels Verbindungsstücken 25 verbunden und bilden einen Kreis oder eine ellipsenähnliche Form, auf welchen mit vier zusätzlichen bogenförmigen Tragstrukturelementen 1 ein kuppelähnliches Vierbein aufgesetzt ist. Eine wasserdichte Hülle 7, welche in der Draufsicht Fig. 3a wiederum weggelassen ist, ist über die Kuppel gezogen und an den Tragstrukturelementen 1 befestigt, wie aus Fig. 3b ersichtlich. Zusätzlicher Auftrieb kann wiederum durch eine oder mehrere zusätzliche mit Leichtgas gefüllte Auftriebskörper 8, welche nicht Teil der Tragstruktur sind, bereitgestellt werden. In diesem dritten Ausführungsbeispiel ist ein solcher Auftriebskörper 8 unter der Kuppel an den Tragstrukturelementen 1 befestigt. Wichtig ist, dass bei der Planung schwebender Strukturen auf eine stabile Fluglage geachtet wird. Um ein Kentern der Struktur bei freiem Schweben zu verunmöglichen oder zumindest zu erschweren, ist es naheliegend, dass der Gewichtsschwerpunkt unter dem Auftriebsschwerpunkt zu liegen kommt.

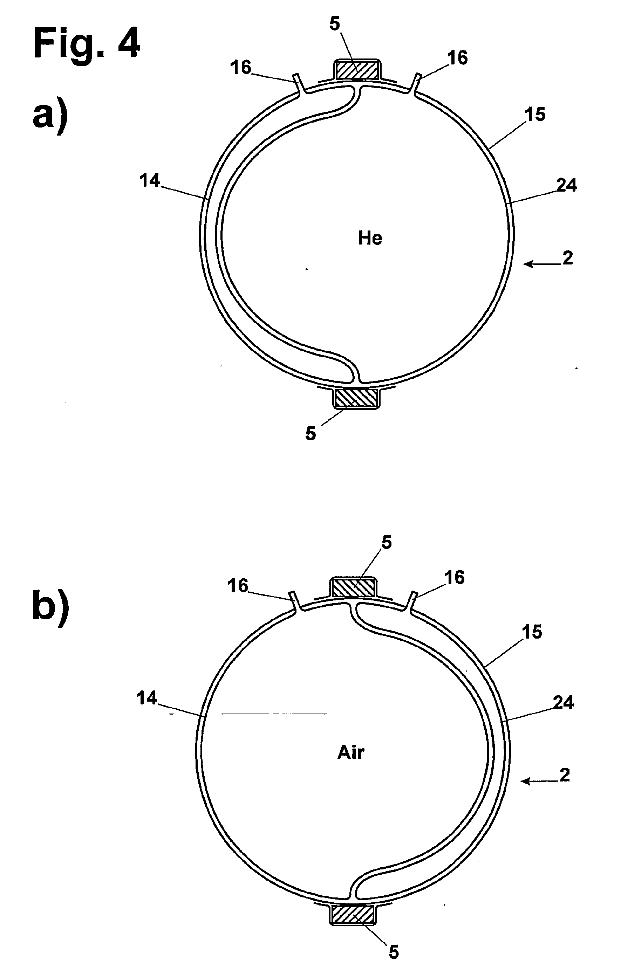

Fig. 4 zeigt Details eines Ausführungsbeispiels eines Tragstrukturelementes 1, hier mit zwei diametral entgegengesetzten Druck/Zugelementen 5. Einerseits können die Hohlkörper 2 der Tragstrukturelemente 1 direkt mit einem Leichtgas befüllt werden. Andererseits ist es für eine Regelung des Auftriebs und den vereinfachten Aufbau der Strukturen am Boden wünschenswert, die Hohlkörper 2 der Tragstrukturelemente 1 mit Luft oder Leichtgas in kontinuierlichem Mischverhältnis füllen zu können. Um das wertvolle Leichtgas nicht mit Luft zu verunreinigen und seine Wiederverwendung zu verunmöglichen, sind im durch eine flexible dehnungsarme Hülle 15 gebildeten Hohlkörper 2 in Fig. 4 zwei gasdichte Blasen, eine Luftblase 14 und eine Leichtgasblase 24, mit jeweils mindestens einem eigenen Ventil 16 dargestellt. Beide Blasen können unter Druck im Wesentlichen das ganze Volumen des Hohlkörpers 2 einnehmen. Die Luftblase 14 und die Leichtgasblase 24 sind zu diesem Zweck entweder aus elastischem Material gefertigt, oder genügend gross geschnitten. Während die Leichtgasblase 24 für die Aufnahme des Leichtgases bestimmt ist, wird die Luftblase 14 als Luftreservoir eingesetzt. Durch diese Anordnung ist es möglich sämtliche Abstufungen zwischen luftgefüllt und vollständig leichtgasgefüllt einzustellen, indem Luft oder Leichtgas zu- oder abgepumpt wird (sog. Ballonet-Prinzip). Fig. 4a zeigt das Tragstrukturelement 1 in schwebendem Zustand. Die den grössten Teil des Hohlkörperquerschnittes einnehmende rechte Leichtgasblase 24 ist mit einem Leichtgas gefüllt, die linke Luftblase 14 mit Luft. In Fig. 4b nimmt die Luftblase 14 den grössten Teil des Hohlkörpervolumens ein. Der Auftrieb des Tragstrukturelementes 1 ist gegenüber der Situation in Fig. 4a verringert.

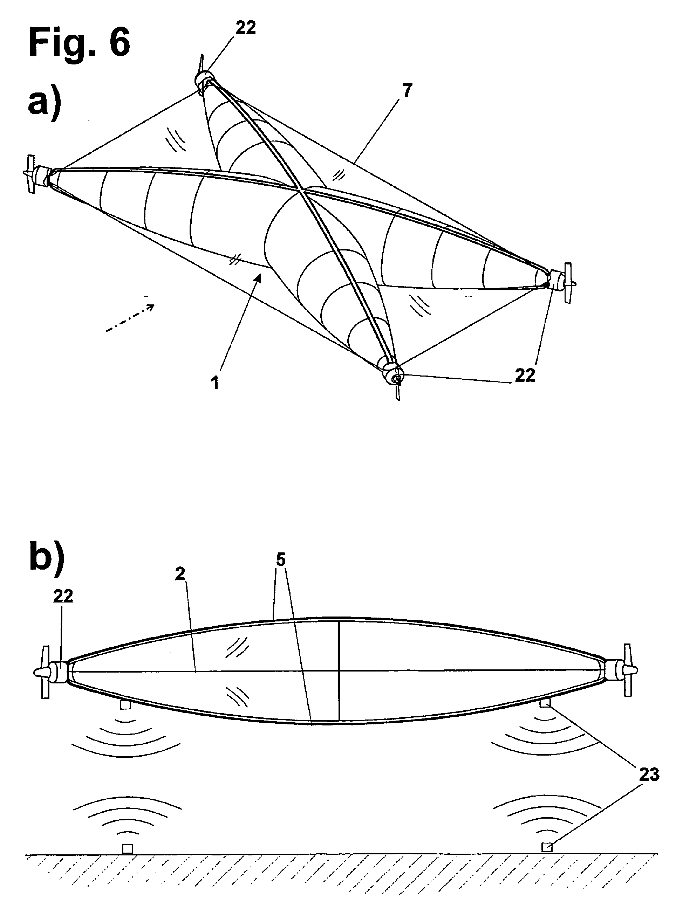

Wie in Fig. 5 im Querschnitt gezeigt kann anstelle des Hohlkörpers 2 der Tragstrukturelemente 1 auch ein mit einer dehnungsarmen Membran oder einem Netz aufgespannter zusätzlicher Hohlraum 17 zwischen einem beispielsweise rechteckigen Rahmen aus Tragstrukturelementen 1 analog eine Leichtgasblase 24 und eine Luftblase 14 enthalten, welche einander gegenseitig verdrängen und den ganzen Hohlraum 17 je für sich einnehmen können. Die obere Hülle 18 bildet das wasser- und winddichte Dach und kann aus einem wasserdichten dehnungsarmen flexiblen Material gefertigt werden, während für die untere Hülle 19 aus Gewichtsgründen auch ein dehnungsarmes Netz benutzt werden kann. Untere und obere Hülle 18, 19 bilden zusammen mit Tragstrukturelementen 1 den Hohlraum 17. Eine beispielsweise bodengestützte oder auf einem Fahrzeug postierte Regel- und Steuervorrichtung 20 ist mit einer Verbindungsleitung 21 mit dem schwebenden und mit Seilverankerungen 9 am Boden fixierten Dach verbunden. Die Verbindungsleitung enthält mindestens zwei Gasleitungen je für das Leichtgas und die Druckluft, sowie allenfalls zusätzliche Datenleitungen für die Übertragung von Sensordaten oder Steuerbefehlen und eine Stromversorgungsleitung. Die Regel- und Steuervorrichtung 20 enthält beispielsweise einen Leichtgasspeicher, Druckpumpen für Luft und Leichtgas, eine Elektronik zur Auswertung der Messdaten von in der Tragstruktur angebrachten Sensoren, welche auftriebsrelevante Grössen wie beispielsweise Temperatur und Druck inner- und ausserhalb des Hohlkörpers 2 und die Kräfte an den Seilverankerungen 9 messen. Elektronische Steuerungen, welche den Auftrieb einer schwebenden Tragstruktur mittels der oben beschriebenen Auftriebsvariationsmöglichkeiten konstant halten können, sind dem Fachmann bekannt und es wird daher nicht näher darauf eingegangen. Das in Fig. 5 gezeigte Ausführungsbeispiel kann mittels mehrerer symmetrisch verteilter Leichtgasblasen 24 und Luftblasen 14 ausgeführt werden, so dass bei Variation des Leichtgas- und des Luftvolumens keine wesentliche Veränderung der Auftriebsverteilung erfolgt. Mit zwei Blasen wird diese Symmetrie erreicht, indem der Hohlraum 17 nicht vertikal, wie in Fig. 5, sondern horizontal unterteilt wird, wobei sich Leichtgasblase 24 wie Luftblase 14 über die ganze horizontale Ausdehnung des Hohlraums 17 erstrecken.

Im Erfindungsgedanken enthalten ist auch eine Ausführung eines Daches gemäss Fig. 5, welches keine Blasen 14,24 im Hohlraum 17 aufweist, sondern in welcher der Hohlraum 17 durch gasdichte Membranen gebildet wird und direkt mit Leichtgas befüllt werden kann.

Fig. 6 zeigt ein frei schwebendes, selbstpositionierendes Regen- und Sonnendach. Bei den vorangehenden Beispielen wird die schwebende Dachstruktur, einem Fesselballon ähnlich, beispielsweise mit Seilverankerungen 9 fest am Boden verankert und in Position gehalten. Denkbar und erfindungsgemäss sind auch Stützen, welche bei ungenügendem Auftrieb des Daches die resultierende Restgewichtslast übernehmen können und so aufwändige Auftriebsregelungsmittel überflüssig machen können. Im Fall eines temporär einsetzbaren Daches für beispielsweise ein Fussballstadion kann diese stützende und positionsbestimmende Funktion auch durch das fest montierte Tribünendach übernommen werden. Das in Fig. 6 gezeigte Ausführungsbeispiel eines Daches ist völlig frei schwebend und ohne kräfteeinleitenden Bodenkontakt. Ein kreuzförmiges Tragstrukturelement 1 ist mit einer Hülle 7 bespannt. Die Hülle 7 ist in den Figuren, der besseren Anschaulichkeit wegen, nur angedeutet und transparent dargestellt. Bei diesem Ausführungsbeispiel eines schwebenden Daches handelt es sich um einen eigentlichen steuerbaren und motorisierten Flugkörper, der dank mehrerer vertikal und horizontal voll schwenkbarer, motorgetriebener Propeller 22 Flughöhe, Geschwindigkeit und Richtung variieren kann. In diesem Beispiel sind deren vier dargestellt, erfindungsgemäss sind aber auch mehr oder weniger voll schwenkbare Antriebsaggregate. Die Flughöhe kann einerseits bis zu einem gewissen Grad dynamisch durch die nach oben oder unten gerichteten Propeller 22 bestimmt werden, andererseits können die in Fig. 4 und 5 beschriebenen Systeme mit Leichtgasblasen 24 und Luftblasen 14 für die statische Auftriebsveränderung genutzt werden. Beispielsweise kann als Vereinfachung in der Luftblase 14 mit einer Pumpe mehr oder weniger Druck erzeugt werden, wodurch die Luft mehr oder weniger Volumen einnimmt und so der Auftrieb variiert werden kann. Ein Positionierungssystem 23 erfasst die aktuelle Position des Daches. In Fig. 6b ist ein bodengestütztes System mit Sender/Empfänger-Geräten am Boden und am Dach dargestellt. Die Positionierung kann beispielsweise auch mittels satellitengestützem Navigationssystem zur Ortung, Bodenradar zur Messung der Flughöhe oder Laufzeitmessungen von zwischen Boden und Dach verlaufender Funk- oder Schallsignale zur Bestimmung von Höhe und Position erfolgen. Dem Fachmann sind weitere Verfahren zur Positionsbestimmung bekannt, beispielsweise bildverarbeitende Methoden, welche Video- oder regel-mässig erstellte Standbilder auswerten, mit einem Sollzustand vergleichen und allenfalls notwendige Korrekturen berechnen können oder Ausrichtung an bodengestützten Lasern: Von einem Luftschiff unterscheidet sich dieses Ausführungsbeispiel insbesondere durch seine horizontal grosse, flächige Ausdehnung bei gleichzeitig geringer Windangriffsfläche, um eine möglichst grosse Fläche abzudecken.

Es gibt viele Einsatzmöglichkeiten für schwebende Dachkonstruktionen mit grossen Spannweiten. Einige typische Beispiele sind Festhallenbedachungen, temporäre Schutzdächer bei Dachdeckerarbeiten, temporäre Vollbedachungen von halboffenen Sportarenen, die schnelle temporäre Bedachung einer Unglücksstätte wie beispielsweise die Absturzstelle eines Flugzeuges, Schlechtwetterdächer für Open-Air-Veranstaltungen etc.. Weitere Einsatzmöglichkeiten bieten sich an bei Dächern, welche nur für die Montage zum Schweben gebracht werden. Sobald das Dach richtig positioniert auf beispielsweise Säulen aufliegt, kann das Leichtgas in den Hohlkörpern durch Luft ersetzt werden, was den Betrieb eines solchen Daches über längere Zeit infolge eines verminderten Leichtgasverbrauchs wesentlich wirtschaftlicher gestaltet. Der Vorteil einer kranlosen, einfachen und schnellen Montage bleibt bestehen, auch wenn die Lager des Daches, seien es Stützen oder Wände stabiler ausgeführt werden müssen als bei permanent schwebendem Betrieb.

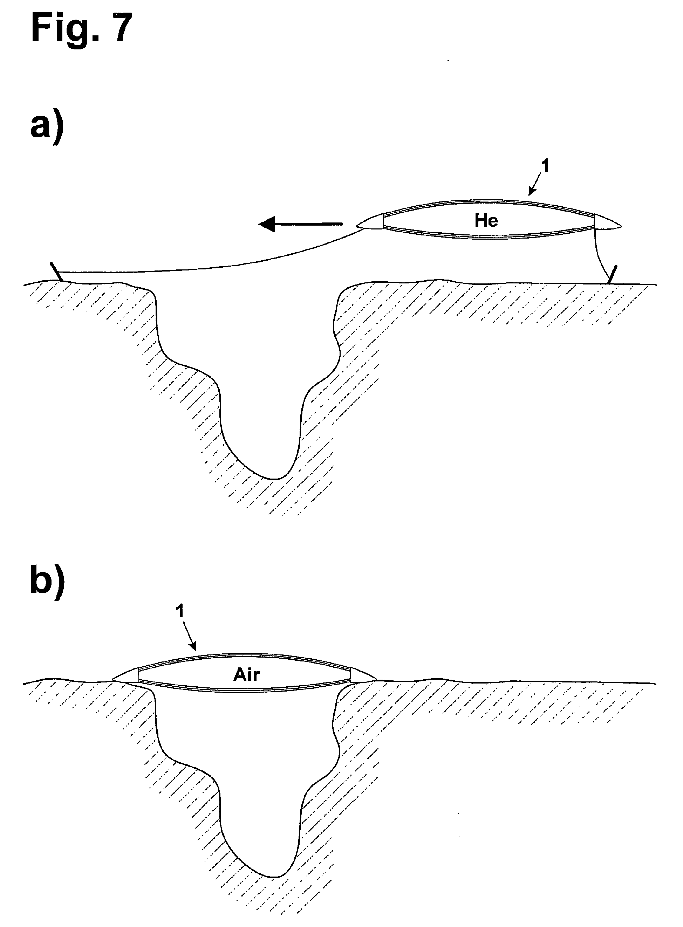

In Fig. 7 wird ein weiteres Anwendungs- und Ausführungsbeispiel schwebender Tragstrukturen gezeigt. Eine aus D6 bekannte Brücke mit pneumatischen Trägern wird in den Hohlkörpern 2 der Tragstrukturelemente 1 mit zusätzlichen Leichtgasblasen 24 ausgerüstet und bei Bedarf mit einem in der Fig. 7 nicht sichtbaren, zwischen den Trägern und unter der Fahrbahn liegenden, zusätzlichen externen Auftriebskörper 8 erweitert. Eine solche Brücke kann nun als Not- oder Hilfsbrücke auf der einen Seite des zu überspannenden Hindernisses aufgebaut, zum Schweben gebracht, das heisst mit Leichtgas befüllt werden (Fig. 7a) und anschliessend problemlos über das Hindernis geschoben oder gezogen und auf den Auflagern positioniert werden. Sobald die Brücke in Position ist, kann das Leichtgas aus der Leichtgasblase 24 abgepumpt und die Hohlkörper 2 mit Druckluft beaufschlagt werden (Fig. 7b). Auch hier gilt natürlich, dass eine solche Tragstruktur stabil schweben muss. Es kann daher bei einer Brücke notwendig sein, die Fahrbahn erst nachträglich zu montieren, da andernfalls die Struktur zu schwer oder zu toplastig wäre, um stabil zu schweben. Wird die Brücke während des Montagevorganges beispielsweise auf einer Seite an den Enden der beiden Tragstrukturelemente 1 geführt und am Kentern gehindert, so kann die Brücke auch mit instabilem Gleichgewicht positioniert werden, ohne zu kentern.

## Patentansprüche

1. Tragstruktur bestehend aus mindestens einem Tragstrukturelement (1),
- mit einem gasdichten und durch Druckgas beaufschlagbaren langgestreckten Hohlkörper (2) aus flexiblem Material,
- ferner mit mindestens zwei Druck/Zugelementen (5),
- wobei die mindestens zwei Druck/Zugelemente (5) an ihren Enden kraftschlüssig miteinander verbunden sind,
- und wobei die auf Druck beanspruchbaren Druck/Zugelemente (5) längs einer Mantellinie des Hohlkörpers (2) an diesem anliegen und kraftschlüssig mit ihm verbunden sind,
**dadurch gekennzeichnet, dass** der Hohlkörper (2) des mindestens einen Tragstrukturelementes (1) aus dehnungsarmem flexiblem Material gefertigt ist, wobei dieser Hohlkörper (2) mindestens eine mit Luft gefüllte Luftblase (14) und mindestens eine mit Leichtgas gefüllte Leichtgasblase (24) enthält, wobei die Blasen (14,24) so gefertigt sind, dass sowohl alle Luftblasen (14) als auch alle Leichtgasblasen (24) zusammen den Hohlkörper (2) auszufüllen vermögen, wodurch alle Abstufungen zwischen ganz mit Luft beaufschlagtem und ganz mit Leichtgas beaufschlagtem Hohlkörper (2) erreicht werden können.

2. Tragstruktur nach Patentanspruch 1, **dadurch gekennzeichnet, dass** mindestens ein weiterer Auftriebskörper (8) vorhanden und ausserhalb des Hohlkörpers (2) angebracht ist und mit Leichtgas gefüllt werden kann

3. Tragstruktur nach Patentanspruch 1 oder 2, **dadurch gekennzeichnet, dass** sie eine wasserdichte Hülle (7) aufspannen kann.

4. Tragstruktur nach einem der Patentansprüche 1 bis 3, **dadurch gekennzeichnet, dass** mindestens ein Hohlraum (17) vorhanden ist, gebildet durch das mindestens eine Tragstrukturelement (1) und an diesem befestigte Hüllen (18,19), wobei dieser Hohlraum (17) mit Leichtgas gefüllt werden kann.

5. Tragstruktur nach Patentanspruch 4, **dadurch gekennzeichnet, dass** der mindestens eine Hohlraum (17) mindestens je eine Luftblase (14) und eine Leichtgasblase (24) enthält, wobei die Blasen (14,24) so gefertigt sind, dass sowohl alle Luftblasen (14) als auch alle Leichtgasblasen (24) zusammen den Hohlraum (17) auszufüllen vermögen, wodurch alle Abstufungen zwischen ganz mit Luft beaufschlagtem und ganz mit Leichtgas beaufschlagtem Hohlraum (17) erreicht werden können.

6. Tragstruktur nach einem der Patentansprüche 1 oder 5, **dadurch gekennzeichnet, dass** der Hohlkörper (2) oder Hohlraum (17) luftdicht ausgeführt ist und mit Druckluft beaufschlagt werden kann, wobei in ihm mindestens eine Leichtgasblase (24) vorhanden ist.

7. Tragstruktur nach einem der Patentansprüche 1 bis 6, **dadurch gekennzeichnet, dass** Mittel vorhanden sind, um die Tragstruktur ohne kräfteeinleitenden Bodenkontakt auf gleichbleibender Position und in gleichbleibender Höhe zu halten.

8. Tragstruktur nach einem der Patentansprüche 1 bis 6 **dadurch gekennzeichnet, dass** mehrere gleichartige oder verschieden ausgeführte Tragstrukturelemente (1) vorhanden und zu einer gesammten Tragstruktur zusammengefügt sind.

9. Tragstruktur nach Patentanspruch 7 Oder 8, **dadurch gekennzeichnet, dass** die Mittel bestehen aus
- mindestens einem schwenkbaren Antriebsaggregat mit Propeller zum Bewegen der Tragstruktur,
- einer Auftriebsvariationsvorrichtung,
- weiter aus einer Positionsbestimmungsvorrichtung, mit Sensoren, Signalgeneratoren und Auswertungselektronik zur Messung von Position und Flughöhe,
- sowie aus einer Steuer- und Regelvorrichtung, welche dazu dient, die Tragstruktur ferngesteuert zu bewegen oder sie eine Sollposition und Sollflughöhe einnehmen und einhalten zu lassen.

10. Verwendung einer Tragstruktur nach einem der Patentansprüche 1 bis 9 als Bedachung.

11. Verwendung einer Tragstruktur nach einem der Patentansprüche 1 bis 9 als selbstaufrichtende Bedachung.

12. Verwendung einer Tragstruktur nach einem der Patentansprüche 1 bis 9 als Brücke.

## Claims

1. A bearing structure comprising at least one bearing-structure element (1),
- with a gas-tight elongated hollow body (2) of flexible material which can be pressurised by compressed gas,
- furthermore, with at least two compression/tension elements (5),
- whereby the at least two compression/tension elements (5) are connected together at their ends in a friction-locked manner,
- and whereby the compression/tension elements (5), which can be placed in compression, lie along a surface line of the hollow body (2) adjacent thereto and are connected thereto in a friction-locked manner,
**characterised in that**
- the hollow body (2) of the at least one bearing-structure element (1) is made from low-expansion flexible material, whereby this hollow body (2) contains at least one air bubble (14) filled with air and at least one light gas bubble (24) filled with light gas, whereby the bubbles (14, 24) are formed in such way that all air bubbles (14) as well as all light gas bubbles (14) together can occupy the whole volume of hollow body (2), whereby all gradations between a copletely air-filled and a completely gas-filled hollow body (2) can be achieved.

2. The bearing structure according to claim 1, **characterised in that** at least one further buoyancy body (8) is fitted outside the hollow body (2) to the at least one bearing-structure element (1), which body can be pressurised with a light gas.

3. The bearing structure according to claims 1 or 2, **characterised in that** the bearing structure stretches out a water-tight covering (7).

4. The bearing structure according to any one of claims 1 to 3, **characterised in that** at least one hollow space (17) is present, formed by at least one bearing-structure element (1) and coverings (18, 19) fixed thereto, whereby this hollow space (17) can be filled with light gas.

5. The bearing structure according to claim 4, **characterised in that** the at least one hollow space (17) contains at least one air bubble (14) and one light-gas bubble (24) respectively, whereby the bubbles (14,24) are produced in such a way that all the air bubbles (14) and all the light-gas bubbles (24) are capable together of filling the hollow space (17), as a result of which all gradations between a hollow space (17) wholly pressurised with air and wholly pressurised with light gas can be achieved.

6. The bearing structure according to claims 1 or 5, **characterised in that** the hollow body (2) or hollow space (17) is designed air tight and can be pressurised with compressed air, whereby it contains at least one light gas bubble (24).

7. The bearing structure according to any one of claims 1 to 6, **characterised in that** means are present in order to hold the bearing structure at a constant position and at a constant height without force-inducing ground contact.

8. The bearing structure according to any one of claims 1 to 6, **characterised in that** a multidude of equal or differently designed bearing structures (1) is present and are joined to a united bearing structure.

9. The bearing structure according to claims 7 or 8, **characterised in that** the means comprise
- at least one swivellable drive unit with propeller for moving the bearing structure
- a buoyancy variation device,
- furthermore, a position-fixing device, with sensors, signal generators and evaluation electronics for the measurement of position and flying height,
- as well as a control and regulating device, which serves to move the bearing structure in a remote-controlled manner or to cause it to assume and maintain a nominal position and a nominal flying height.

10. Use of a bearing structure according to any one of claims 1 to 9 as roofing.

11. Use of a bearing structure according to any one of claims 1 to 9 as self-erecting roofing.

12. Use of a bearing structure according to any one of claims 1 to 9 as a bridge.

## Revendications

1. Structure porteuse constituée d'au moins un élément de structure porteuse (1),
- comportant un corps creux (2) en un matériau flexible, allongé, étanche au gaz et pouvant être sollicité par du gaz pressurisé,
- comportant en outre au moins deux éléments de pression/traction (5),
- moyennant quoi au moins deux éléments de pression/traction (5) sont reliés l'un à l'autre par conjonction de force à leurs extrémités,
- et moyennant quoi les éléments de pression/traction (5) pouvant être sollicités par une pression reposent le long d'une ligne de gaine du corps creux (2) sur celui-ci et sont reliés à lui par conjonction de force,
**caractérisée en ce que** le corps creux (2) d'au moins un élément de structure porteuse (1) est fabriqué en un matériau flexible peu enclin à se dilater, moyennant quoi ce corps creux (2) contient au moins une bulle d'air (14) remplie d'air et au moins une bulle de gaz léger (24) remplie de gaz léger, moyennant quoi les bulles (14,24) sont fabriquées de telle sorte que tant toutes les billes d'air (14) que également toutes les bulles de gaz léger (24) puissent être remplies conjointement au corps creux (2), moyennant quoi tous les échelons entre le corps creux (2) totalement sollicité par de l'air et totalement sollicité par du gaz léger peuvent être atteints.

2. Structure porteuse selon la revendication 1, **caractérisée en ce que** au moins un autre corps de portance (8) est présent et monté à l'extérieur du corps creux (2) et peut être rempli de gaz léger.

3. Structure porteuse selon la revendication 1 ou 2, **caractérisée en ce que** elle peut haubanner une enveloppe (7) étanche à l'eau.

4. Structure porteuse selon une des revendications 1 à 3, **caractérisé en ce que** au moins un espace creux (17) est présent, formé par au moins un élément de structure porteuse (1) et des enveloppes (18,19) fixées sur celui-ci, moyennant quoi cet espace creux (17) peut être rempli de gaz léger.

5. Structure porteuse selon la revendication 4, **caractérisée en ce que** au moins un espace creux (17) contient au moins respectivement une bulle d'air (14) et une bulle de gaz léger (24), moyennant quoi les bulles (14,24) sont fabriquées de telle sorte que tant toutes les bulles d'air (14) que également toutes les bulles de gaz léger (24) puissent remplir conjointement l'espace creux (17), moyennant quoi tous les échelons entre l'espace creux (17) totalement sollicité par de l'air et totalement sollicité par du gaz léger peuvent être atteints.

6. Structure porteuse selon une des revendications 1 ou 5, **caractérisée en ce que** le corps creux (2) ou l'espace creux (17) est configuré de manière étanche à l'air et peut être sollicité par de l'air pressurisé, moyennant quoi au moins une bulle de gaz léger (24) est présente dans celui-ci.

7. Structure porteuse selon une des revendications 1 à 6, **caractérisée en ce que** des moyens sont présents, afin de maintenir la structure porteuse à une position invariable et à une hauteur invariable sans contact au sol induisant des forces.

8. Structure porteuse selon une des revendications 1 à 6, **caractérisée en ce que** plusieurs éléments de structure porteuse (1) de configuration similaire ou différente sont présents et sont assemblés en une structure porteuse complète.

9. Structure porteuse selon la revendication 7 ou 8, **caractérisée en ce que** les moyens sont constitués de
- au moins un groupe d'entraînement pivotant avec des propulseurs pour mouvoir la structure porteuse,
- un dispositif de variation de portance,
- en outre d'un dispositif de détermination de position, avec des capteurs, des générateurs de signaux et une électronique d'évaluation afin de mesurer la position et la hauteur de vol,
- ainsi que d'un dispositif de commande et de réglage, qui sert à mouvoir la structure porteuse de manière pilotée à distance ou lui faire adopter ou conserver une position de consigne et une hauteur de vol de consigne.

10. Utilisation d'une structure porteuse selon une des revendications 1 à 9 comme toiture.

11. Utilisation d'une structure porteuse selon une des revendications 1 à 9 comme toiture se dressant de manière autonome.

12. Utilisation d'une structure porteuse selon une des revendications 1 à 9 comme pont.
